Europäisches Patentamt

European Patent Office

Office européen des brevets

(11) Numéro de publication: **0 234 162**
**A1**

# (12) DEMANDE DE BREVET EUROPEEN

(21) Numéro de dépôt: **86402951.7**

(22) Date de dépôt: **29.12.86**

(51) Int. Cl.⁴: **B01D 23/10** , B01D 21/08

(30) Priorité: **30.12.85 FR 8519434**

(43) Date de publication de la demande:
**02.09.87 Bulletin  87/36**

(84) Etats contractants désignés:
**AT BE CH DE ES FR GB GR IT LI LU NL SE**

(71) Demandeur: **BECTRA S.A. Bureau d'Etude et de Coordination de Travaux d'Assainissement**
**3, rue Elisa Lemonnier**
**F-75012 Paris(FR)**

(72) Inventeur: **Dacquet, Philippe**
**22, Boulevard de Reuilly**
**F-75012 Paris(FR)**

(74) Mandataire: **Combe, André et al**
**CABINET BEAU DE LOMENIE 55, rue d'Amsterdam**
**F-75008 Paris(FR)**

(54) **Dispositif pour l'épuration de l'eau.**

(57) La présente invention concerne un appareil de filtration constitué: -d'un récipient (1) comportant un puits central (5) et un certain nombre de chambres individuelles (6), (7), (8) radiales ; -chacune des chambres radiales comportant : . un lit de filtration - (12) disposé sur un plateau (13), ledit plateau délimitant entre lui-même et le fond du récipient une chambre d'évacuation (15) ; . une goulotte ouverte - (17) permettant l'arrivée de l'eau et . une ouverture - (22) située vers le sommet dudit puits et mettant en relation chacune des chambres avec ledit puits, chaque puits étant muni à sa base d'un tube d'évacuation (23) et, -ledit récipient comportant à sa base une tubulure d'évacuation (24) de l'eau pure.

Fig.1

## Dispositif pour l'épuration de l'eau.

La présente invention concerne un dispositif pour l'épuration de l'eau.

Il est connu que l'eau que l'on trouve dans la nature doit le plus souvent être purifiée avant de pouvoir être consommée par l'homme. Cette purification peut, pour certaines eaux, prendre la forme d'une simple filtration à travers un filtre convenable (généralement un lit de sable ou équivalent), mais elle peut également nécessiter un traitement préalable dans lequel on associe une floculation des principales impuretés suivie d'une décantation assurant la séparation des flocs obtenus d'avec l'eau prépurifiée qui sera ultérieurement traitée par filtration.

Dans un certain nombre de pays ou de régions reculées, on dispose souvent d'une eau naturelle plus ou moins pure que l'on traite en utilisant des procédés et des dispositifs de filtration comme ceux décrits dans le DE 1 811 507 (UNION TANK CAR CO.) et le FR 2 143 728 (ECODYNE CORP.)-,comportant des cycles de nettoyage à contre-courant. Cependant de tels procédés demandent une énergie importante (par exemple de l'électricité) pour faire fonctionner des pompes, mélangeurs..; or on ne peut pas disposer partout d'une telle énergie. Il est donc souhaitable de pouvoir trouver un appareil de purification de l'eau qui, à l'aide d'une faible énergie ou même en n'utilisant que la pression de l'eau utilisée, permettra la préparation d'une eau potable ; c'est là l'objet de la présente invention.

Le dispositif selon l'invention comporte un appareil de purification,par filtration, d'une eau peu polluée ou d'une eau prépurifiée; si nécessaire, ledit appareil est précedé d'un appareil de prépurification utilisant la technique de floculation-décantation fournissant une eau prépurifiée audit appareil de filtration.

L'appareil de filtration selon l'invention utilisé pour le traitement d'eau peu polluée ou d'eau prépurifiée est caractérisé en ce qu'il est constitué:

-d'un récipient de forme genéralement cylindrique formé d'une paroi extérieure,d'un fond et,éventuellement,d'un couvercle supérieur, ledit récipient comportant un puits central et un certain nombre de chambres individuelles limitées par des parois radiales verticales disposées entre ledit puits central et la paroi extérieure du récipient,

-chacune des chambres individuelles comportant :

. un lit de filtration (de préférence de sable) disposé sur un plateau muni de buselures, ledit plateau délimitant entre lui-même et le fond du récipient une chambre d'évacuation qui est en liaison avec les chambres d'évacuation correspondantes des chambres individuelles voisines,

. une goulotte ouverte permettant l'arrivée de l'eau à purifier et, lors du lavage du lit, l'évacuation des résidus, et

. une ouverture située vers le sommet dudit puits et mettant en relation chacune des chambres avec ledit puits,

-ledit puits étant muni à sa base d'un tube d'évacuation, et

-ledit récipient comportant à sa base, et sur sa paroi extérieure, une tubulure d'évacuation de l'eau purè provenant des chambres d'évacuation.

L'appareil comporte également sur les diverses tubulures d'arrivée et de départ un certain nombre de vannes généralement manipulées à la main et qui seront nécessaires pour pouvoir faire fonctionner ledit appareil de filtration selon le procédé qui sera ultérieurement décrit.

On notera que :

-les goulottes dudit récipient pourront être avantageusement alimentées à partir d'une chambre de répartition constituée d'un cylindre central, lui-même alimenté en eau à purifier, ouvert, autour duquel se situe une couronne de laquelle partent les diverses tubulures d'alimentation des goulottes,

-chacune des chambres d'évacuation peut être munie d'une tubulure d'arrivée d'eau sous pression permettant, si nécessaire, d'assurer temporairement un brassage efficace des lits de filtration.

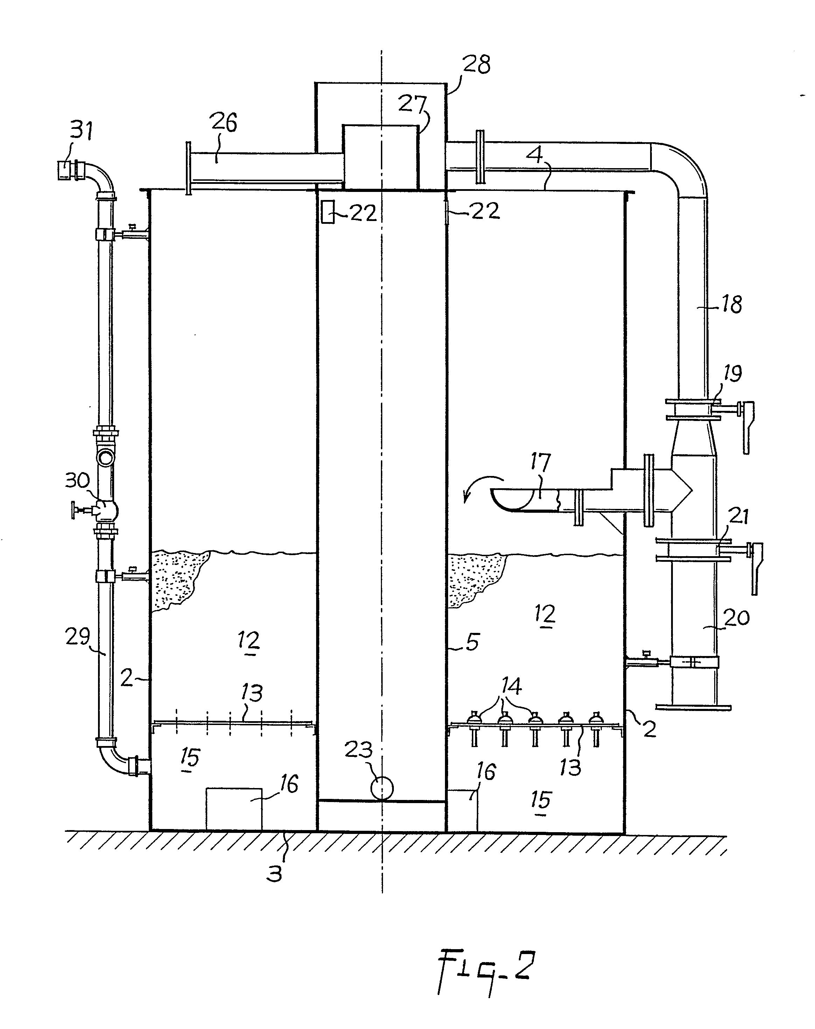

L'appareil de filtration selon l'invention sera illustré, dans un exemple non limitatif, par les figures 1, 2 et 3 ; la figure 1 est une vue en plan d'un appareil comportant trois chambres individuelles ; la figure 2 est une coupe selon II II dudit appareil et la figure 3 est une coupe selon III III dudit appareil.

Sur ces figures, on peut voir :

-en 1, le récipient de forme cylindrique (il s'agit d'un cylindre de section circulaire et de génératrices verticales) ; ce récipient est formé d'une paroi latérale extérieure 2, d'un fond 3 et, éventuellement, d'un couvercle 4 qui évite à l'eau en traitement de se polluer,

-le récipient comporte un puits central 5 et un certain nombre de chambres individuelles 6, 7 et 8 délimitées par des cloisons radiales 9, 10 et 11 disposées entre la paroi du puits central et la paroi latérale extérieure du récipient,

-chacune des chambres individuelles comporte un lit de filtration 12 reposant sur un plateau 13 muni de buselures 14 ; chaque plateau 13 délimite une chambre d'évacuation 15 qui est en liaison par l'intermédiaire d'ouvertures 16 avec la chambre d'évacuation voisine ;

elle comporte également une goulotte ouverte 17 ;

ladite goulotte est alimentée en eau à traiter à partir de la tubulure 18 qui est munie d'une vanne 19 ; ladite goulotte est également en liaison avec une tubulure d'évacuation 20 par l'intermédiaire d'une vanne 21 ; chaque chambre individuelle est munie vers le sommet de la paroi séparant ladite chambre du puits central d'une ouverture 22,

-le puits central comporte à sa partie inférieure une tubulure d'évacuation 23,

-enfin, le récipient porte à sa base (c'est-à-dire au niveau des chambres d'évacuation) une tubulure d'évacuation 24 munie d'une vanne 25.

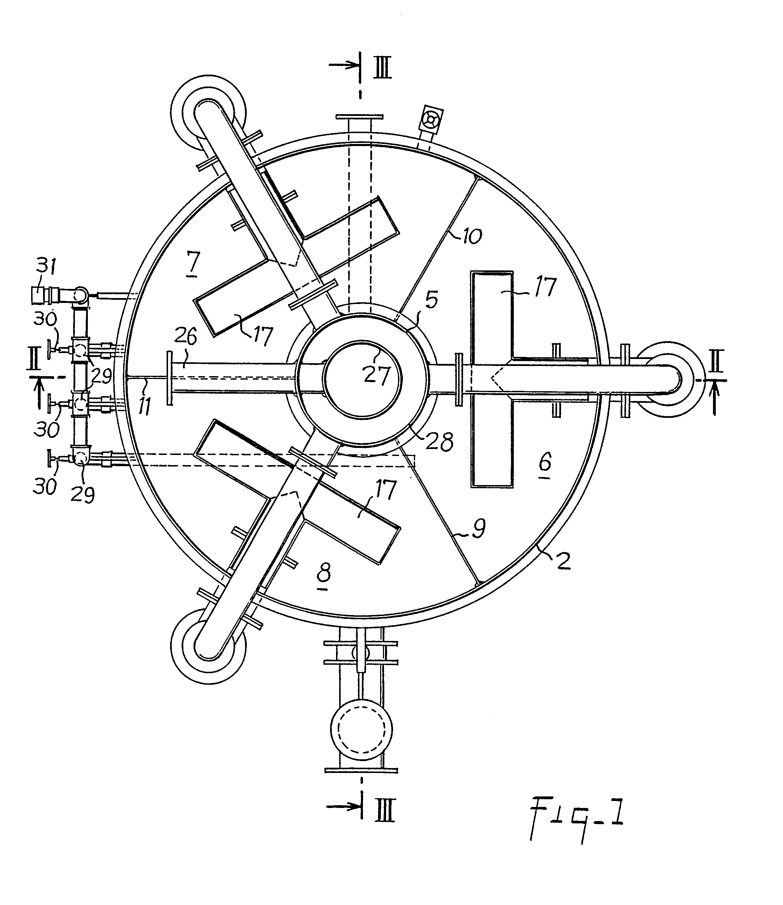

Dans l'appareil représenté sur les figures 1, 2 et 3, l'alimentation en eau peu polluée ou en eau prétraitée est assurée à partir de la canalisation 26 qui débouche dans une chambre ouverte 27, laquelle, par débordement, permet d'alimenter chacune des tubulures 18 qui s'ouvre sur la périphérie d'une chambre 28 entourant 27.

On notera également que chacune des chambres d'évacuation est reliée par l'intermédiaire des tubulures 29 munies de vannes 30 avec une arrivée d'eau 31.

Le fonctionnement de l'appareil selon l'invention est très simple ;

-l'eau peu polluée ou prépurifiée arrive par la canalisation 26, est répartie dans les trois canalisations 18 et se déverse par les goulottes 17 (la vanne 19 étant ouverte et la vanne 21 étant fermée) sur les lits de filtration 12 ; l'eau filtrée sortant par les buselures 14 entre dans les chambres d'évacuation 15 et sort par la tubulure 24 (la vanne 25 étant ouverte),

-au fur et à mesure que l'eau est filtrée, les lits de filtration se colmatent et l'eau montera progressivement dans les chambres individuelles ; lorsque l'un des lits sera considéré comme colmaté (c'est-à-dire comme n'assurant plus une filtration efficace avec un débit convenable), l'eau de la chambre individuelle correspondante aura remplie ladite chambre et se déversera, par l'intermédiaire de l'ouverture 22, dans le puits central et, de là, dans la canalisation d'évacuation 23 ; les ouvriers, conducteurs de l'installation, seront alertés du colmatage d'un lit par l'évacuation d'eau par le tuyau 23, ils procéderont alors au nettoyage du lit colmaté par utilisation de l'eau en provenance des deux autres chambres ;

-supposons que ce soit le lit de la chambre 6 qui soit colmaté, on ferme alors la vanne 19 et on ouvre la vanne 21, ce qui provoque immédiatement l'évacuation de l'eau contenue dans ladite chambre au-dessus du niveau de la goulotte ; on ferme alors la vanne 25 ; ;aga ce moment, l'eau en provenance des chambres d'évacuation correspondant aux chambres individuelles 7 et 8 remonte par les buselures dans le lit de filtration de la chambre individuelle 6 et évacue, par la goulotte de ladite chambre 6, les impuretés entraînées par ledit courant d'eau ascendant ;

-de plus, il est prévu que, dans certains cas, c'est-à-dire lorsque dans au moins l'une des chambres individuelles le lit de filtration est trop colmaté pour pouvoir être nettoyé par le procédé décrit ci-dessus, on pourra envoyer dans la (ou les) chambre d'évacuation correspondantes un courant d'eau sous pression de façon à nettoyer complètement le (ou les) filtre.

Comme on a pu le constater, l'appareillage selon l'invention ne nécessite l'apport d'aucune énergie extérieure ; il fonctionne de façon convenable lorsqu'il est alimenté à l'aide d'eau sous une pression (relative) de 1 à 5 bars environ.Le volume total d'un appareil selon l'invention est très variable ; ce volume peut être adapté pour traiter, selon les modèles,de 10 à 100 m³/h d'eau peu polluée ou prépurifiée.

La présente invention concerne également un appareil de prépurification d'eau polluée, ledit appareil étant disposé en amont de l'appareil décrit ci-dessus et alimentant donc ledit appareil avec l'eau prépurifiée.

L'appareil de prépurification selon l'invention est caractérisé en ce qu'il est constitué d'un récipient vertical de forme cylindrique formé d'une paroi latérale et d'un fond, ledit récipient comportant selon son axe un trop-plein d'évacuation dont la partie inférieure traverse le fond du récipient et dont la partie supérieure, de préférence évasée, est située à un "niveau haut" dudit récipient, ledit trop-plein d'évacuation étant entouré d'une gaine d'amenée partant du fond dudit récipient et arrivant à un "niveau inférieur" audit "niveau haut" dans une chambre de flottation, une tubulure d'évacuation d'eau prépurifiée étant située en dessous dudit "niveau inférieur" et étant protégée par une jupe, ledit récipient étant alimenté, à la base de ladite gaine d'amenée, au moyen d'une eau qui, passant par un hydro-éjecteur, s'est chargée en air et en au moins un réactif chimique de floculation des impuretés et qui, passant ensuite dans un floculateur tubulaire, a permis audit réactif chimique d'effectuer ladite floculation des impuretés.

L'appareil de prépurification selon l'invention peut également comporter :

-des moyens (bacs) pour le stockage dudit (ou desdits) produit chimique de floculation, lesdits moyens étant reliés à l'hydro-éjecteur,

-des moyens permettant de faire varier le niveau de l'eau dans le récipient (ledit niveau étant par ailleurs réglé par le niveau supérieur du trop-plein d'évacuation) de façon à faciliter, si nécessaire, l'évacuation des flocs par ledit trop-plein,

-des moyens d'évacuation des boues pouvant se déposer sur le fond dudit récipient.

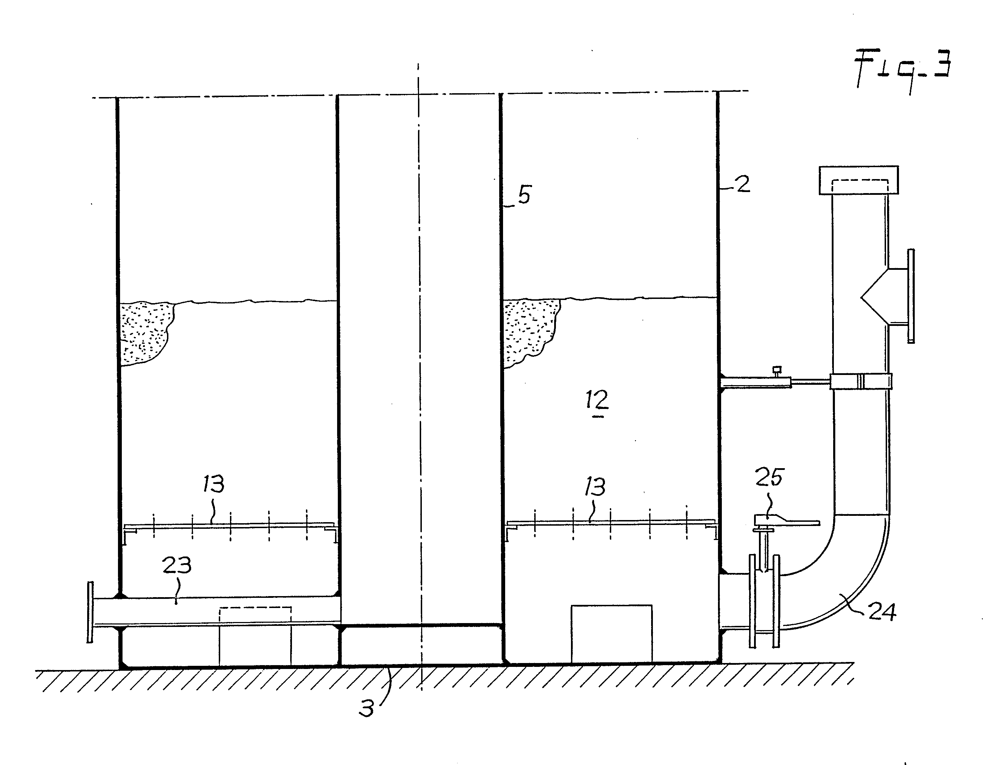

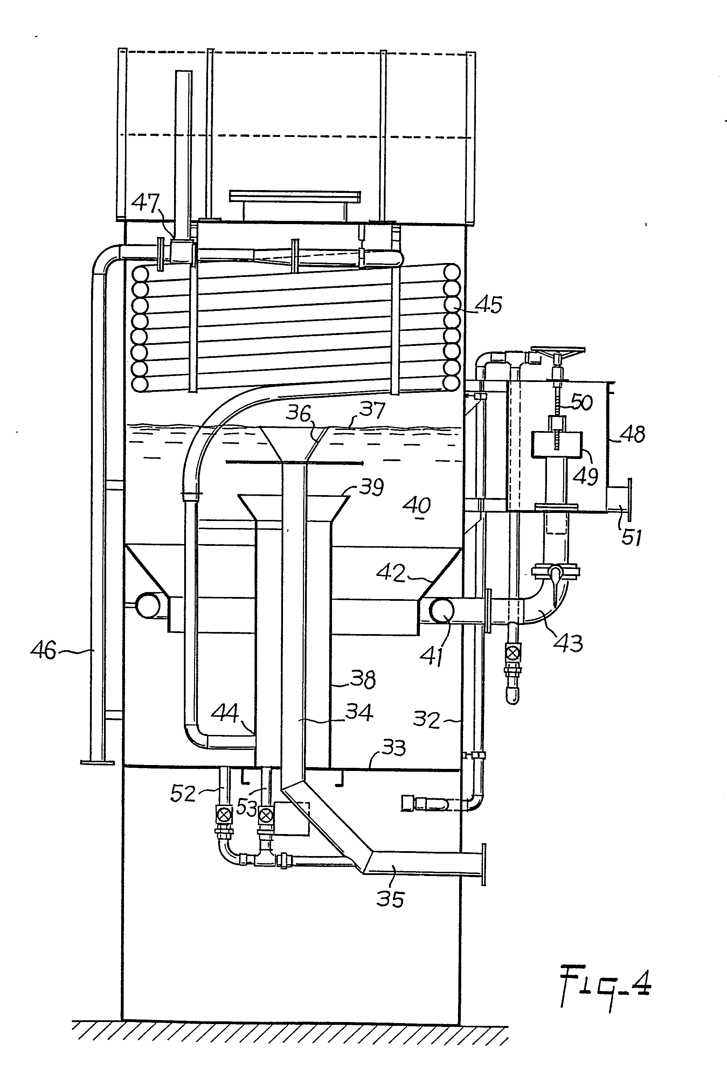

Ledit appareil de prépurification sera mieux compris en se référant à la figure 4 qui représente schématiquement de façon non limitative une coupe transversale d'un appareil selon l'invention.

Sur ladite figure, on peut voir :

-en 32, la paroi latérale cylindrique et, en 33, le fond du récipient,

-en 34, le trop-plein d'évacuation ; la partie inférieure de ce trop-plein traverse le fond 33 du récipient et se prolonge vers l'extérieur par la tubulure 35 ; la partie supérieure de ce trop-plein a une forme évasée 36 et se trouve en partie haute ("niveau haut") du récipient ; on a matérialisé en 37 le niveau de l'eau très impure qui s'évacue par la partie évasée dudit trop-plein,

-le trop-plein 34 est entouré sur une certaine hauteur à partir du fond du récipient par une gaine d'amenée 38 qui débouche en 39, par une partie évasée, au-dessous du niveau haut dudit trop-plein, dans une chambre de flottation 40 ; le niveau haut 39 de ladite gaine d'amenée sera dit "niveau inférieur",

-la tubulure d'évacuation de l'eau prépurifiée se présente sous forme d'une couronne 41 munie d'un certain nombre d'ouvertures situées en partie basse de ladite couronne ; cette couronne est disposée au voisinage de la paroi latérale 32 à un niveau inférieur à celui du "niveau inférieur" (ou niveau d'ouverture de la gaine d'amenée) et les ouvertures ménagées dans ladite couronne sont protégées par une jupe 42 soudée à la paroi latérale 32 ; un tuyau de piquage 43 sur cette couronne permet la sortie effective de l'eau prépurifiée,

-en 44, à la base de ladite gaine d'amenée 38, arrive l'eau alimentant le récipient de floculation ; cette eau provient d'un floculateur tubulaire 45 qui est constitué d'un serpentin avantageusement disposé au-dessus du récipient de floculation ; ledit floculateur tubulaire est lui-même alimenté par une canalisation d'eau polluée 46 qui arrive à un hydro-éjecteur 47 dans lequel l'eau polluée se charge d'une part, en air et, d'autre part, en un certain nombre de produits chimiques connus (alumine par exemple) contenus dans un récipient,

-sur la sortie 43 de l'eau prépurifiée, on a aménagé un système 48 constitué essentiellement d'un trop-plein 49 dont le niveau peut être ajusté au moyen de la crémaillère 50 ; l'eau prépurifiée sort du système 44 par la tubulure 51,

-dans le fond du récipient, on a ménagé deux sorties 52 et 53, munies de vannes et reliées à la tubulure d'évacuation 35, permettant d'évacuer les éventuelles boues qui se déposeraient sur le fond du récipient.

Le fonctionnement de cet appareil de prépurification peut être décrit comme suit :

l'eau polluée arrive par la canalisation 46 sous une pression comprise entre environ 1 et 6 bars et passe dans l'hydro-éjecteur 47 où elle se charge de floculant chimique et de bulles d'air ; l'eau ainsi chargée parcourt le serpentin 45 qui, comme indiqué, est un floculateur tubulaire, c'est-à-dire un tube dans lequel se forment les flocs dudit produit chimique, flocs dans lesquels une part très importante (au moins 90 %) des impuretés de l'eau est emprisonnée ; l'eau comportant lesdits flocs arrive à la base de la gaine d'amenée 44 ; les flocs, du fait de la présence d'air, étant plus légers que l'eau vont flotter à la surface de l'eau et former sur cette surface 37 une couche à évacuer ; cette couche est évacuée en continu par le trop-plein 34 dans le tuyau 35 et rejetée à l'extérieur ; l'eau débarrassée de ses impuretés et subissant dans le récipient une décantation complémentaire sort par les ouvertures de la couronne d'évacuation 40 puis, par l'intermédiaire de la canalisation 43 et du trop-plein 49, par la canalisation 51 ; cette canalisation 51 est avantageusement reliée à la canalisation 26 de l'appareil de purification représenté sur les figures 1, 2 et 3. Le spécialiste comprendra, sans description complémentaire, le rôle et le fonctionnement des canalisations 52, 53 et des vannes prévues sur ces canalisations, et du dispositif 48-49-50 de modification de la hauteur d'eau pour l'évacuation forcée des plus gros flocs.

Comme on le voit, l'appareil selon l'invention peut fonctionner sans apport d'énergie extérieure, car il suffit que la pression de l'eau à l'entrée soit supérieure à environ 1 à 2 bars ; si la pression de l'eau polluée est trop faible, il conviendra alors de prévoir l'utilisation d'une pompe en aval de la canalisation d'arrivée 46.

Bien entendu, diverses modifications peuvent être apportées par l'homme de l'art aux dispositifs et procédés qui viennent d'être décrits à titre d'exemples non limitatifs sans sortir du cadre de l'invention.

## Revendications

1. Appareil de filtration utilisable pour le traitement d'eau peu polluée ou d'eau prépurifiée, caractérisé en ce qu'il est constitué :

-d'un récipient (1) de forme généralement cylindrique formé d'une paroi extérieure (2), d'un fond (3) et, éventuellement d'un couvercle supérieur, ledit récipient comportant un puits central (5) et un certain nombre de chambres individuelles (6), (7), (8) limitées par des parois radiales verticales (9), (10), (11) disposées entre ledit puits central et la paroi extérieure du récipient,

-chacune des chambres individuelles comportant :

. un lit de filtration (12) (de préférence de sable) disposé sur un plateau (13) muni de buselures - (14), ledit plateau délimitant entre lui-même et le fond du récipient une chambre d'évacuation (15) qui est en liaison avec les chambres d'évacuation correspondantes des chambres individuelles voisines,

. une goulotte ouverte (17) permettant l'arrivée de l'eau à purifier et, lors du lavage du lit, l'évacuation des résidus, et

. une ouverture (22) située vers le sommet dudit puits et mettant en relation chacune des chambres avec ledit puits,

-ledit puits étant muni à sa base d'un tube d'évacuation (23), et

-ledit récipient comportant à sa base et sur sa paroi extérieure une tubulure d'évacuation (24) de l'eau pure provenant des chambres d'évacuation.

2. Appareil selon la revendication 1, caractérisé en ce que l'alimentation en eau dudit appareil est réalisée à partir d'une chambre de répartition.

3. Appareil selon l'une des revendications 1 et 2, caractérisé en ce que chacune des chambres d'évacuation est munie d'une tubulure avec vanne permettant l'amenée d'eau sous pression.

4. Appareil pour la purification de l'eau polluée, dans lequel on purifie ladite eau par floculation-flottation et l'eau prépurifiée obtenue est envoyée dans un appareil de filtration selon l'une des revendications 1 à 3, ledit appareil de prépurification étant caractérisé en ce qu'il est formé d'un récipient vertical de forme cylindrique formé d'une paroi latérale (32) et d'un fond (33), ledit récipient comportant selon son axe un trop-plein d'évacuation (34) dont la partie inférieure traverse le fond du récipient et dont la partie supérieure - (36), de préférence évasée, est située à un "niveau haut" dudit récipient, ledit trop-plein d'évacuation étant entouré d'une gaine d'amenée (38) partant du fond dudit récipient et arrivant à un "niveau inférieur" audit "niveau haut" dans une chambre de flottation (40), une tubulure d'évacuation d'eau prépurifiée (41) étant située en dessous dudit "niveau inférieur" et étant protégée par une jupe - (42), ledit récipient étant alimenté (44), à la base de ladite gaine d'amenée, au moyen d'une eau qui, passant par un hydro-éjecteur (47), s'est chargée en air et en au moins un réactif chimique de floculation des impuretés et qui, passant ensuite dans un floculateur tubulaire (45), a permis audit réactif chimique d'effectuer ladite floculation des impuretés.

Fig-1

Fig. 2

Fig.3

0 234 162

Fig-4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 811 507 (UNION TANK CAR CO.) <br> * Page 4, paragraphes 2,3; pages 5-7; page 8, paragraphes 1,2 * | 1,2 | B 01 D 23/10 <br> B 01 D 21/08 |
| | --- | | |
| A | FR-A-2 143 728 (ECODYNE CORP.) <br> * Page 9, lignes 1-35 * | 1 | |
| | --- | | |
| A | GB-A-1 232 572 (F.W. BRAMWELL) <br> * Page 2, lignes 9-67,121-129; page 3, lignes 1-31 * | 1 | |
| | --- | | |
| A | FR-A-2 268 757 (ADKA-MATIC) <br> * Page 5, lignes 10-40; page 6, lignes 1-6 * | 3 | |
| | ----- | | |

DOMAINES TECHNIQUES RECHERCHES (Int. Cl.4)

B 01 D

Le présent rapport de recherche a été établi pour toutes les revendications

| Lieu de la recherche | Date d'achèvement de la recherche | Examinateur |
|---|---|---|
| LA HAYE | 29-04-1987 | KERRES P.M.G. |